Europäisches Patentamt

European Patent Office

Office européen des brevets

(11) Numéro de publication : **0 142 396**
**B1**

(12) **FASCICULE DE BREVET EUROPÉEN**

(45) Date de publication du fascicule du brevet :
**27.05.87**

(21) Numéro de dépôt : **84401812.7**

(22) Date de dépôt : **13.09.84**

(51) Int. Cl.⁴ : **E 04 C 3/29**, B 29 C 67/14 //
**B29K105:04**

(54) **Poutre ou autre élément de grande longueur en matériau composite polymérisé sous chaleur et pression.**

(30) Priorité : **19.09.83 FR 8314839**

(43) Date de publication de la demande :
**22.05.85 Bulletin 85/21**

(45) Mention de la délivrance du brevet :
**27.05.87 Bulletin 87/22**

(84) Etats contractants désignés :
**BE CH DE GB IT LI SE**

(56) Documents cités :
**EP-A- 0 077 727**
**FR-A- 1 288 926**
**GB-A- 1 041 844**
**GB-A- 1 104 842**
**US-A- 3 557 992**
**US-A- 3 736 609**

(73) Titulaire : **AEROSPATIALE Société Nationale Indus-**
**trielle**
**37 boulevard de Montmorency**
**F-75781 Paris Cédex 16 (FR)**

(72) Inventeur : **Michaud-Soret, Jean Alain**
**21 Villa Daviel**
**F-75013 Paris (FR)**

(74) Mandataire : **Barnay, André François**
**Cabinet Barnay 80 rue Saint-Lazare**
**F-75009 Paris (FR)**

Jouve, 18. rue St-Denis. 75001 Paris. France

## Description

La présente invention est relative à la réalisation d'objets de grande longueur en matériaux composites fibres imprégnées d'une résine et notamment à la fabrication de poutres porteuses de grande longueur et d'un bras de liaison pour bateau multicoques.

On sait que la fabrication d'objets de grande longueur en matériaux composites pose des problèmes qui n'ont pu être résolus jusqu'à présent d'une façon entièrement satisfaisante, notamment en ce qui concerne la polymérisation de la résine sous chaleur et pression en raison de la très grande dimension des moules nécessaires et de la commande de leur température.

La demanderesse a mis au point un procédé de fabrication de moules pour la confection d'objets de grandes longueurs en matériaux composites, ce procédé étant décrit dans la demande de brevet européen EP-A-0 141 700 déposée le même jour que la présente demande par la demanderesse. Grâce à ce procédé il est désormais facile et peu coûteux de réaliser des objets de grandes dimensions en matériaux composites.

Il est donc possible, grâce à ce procédé, d'utiliser pleinement les propriétés mécaniques des matériaux composites pour réaliser facilement des poutres et notamment des poutres ayant des formes spéciales en vue d'applications particulières.

On connaît un élément de construction, poutre ou plaque, décrit dans GB-A-1 041 844, qui comprend deux couches externes en matière fibreuse imprégnée de résine, entre lesquelles sont disposées des bandes de section rectangulaire en mousse de matière plastique, avec des pièces de tissu fibreux en Z imprégné de résine et formant des voiles assurant la liaison entre les bandes de matière mousse et les deux couches externe, l'ensemble étant polymérisé.

Une poutre ainsi réalisée présente une résistance importante en poussée dans toutes les directions et, dans certaines conditions, les voiles peuvent travailler en tension, mais ne présente pas de rigidité notable en torsion.

On connaît par ailleurs par GB-A-1 104 842 un élément chauffant électrique par résistance, à basse température, formé d'un fil de résistance électrique disposé entre deux minces feuilles souples en matière fibreuse enduites ou imprégnées de résine thermodurcissable.

Un tel élément chauffant peut être incorporé dans une masse de matière devant être chauffée.

L'invention a pour but de réaliser une poutre du type précité de grande longueur mais présentant d'excellentes propriétés de résistance aussi bien en flexion qu'en torsion et par exemple un bras de trimaran.

Elle a pour objet à cet effet une poutre en matériau composite, du type comprenant deux semelles longitudinales externes réunies par des voiles, en fibres imprégnées de résine, et une âme formée de blocs d'une mousse de matière plastique disposés entre lesdites semelles et lesdits voiles et liés à ces derniers, caractérisé en ce qu'elle comprend des caissons préfabriqués ayant un corps en mousse de matière plastique, et assurant la solidarisation entre les semelles, l'âme en mousse et lesdits voiles de part et d'autre de ceux-ci, lesdites semelles étant constituées par plusieurs couches d'un demi-produit préfabriqué formé de rangées adjacentes de rubans de stratifils disposées entre deux couches de tissu de verre et imprégnées de résine, et deux parois latérales.

Lesdits caissons préfabriqués comprennent chacun un corps, ou âme, en matière plastique mousse dure, enroulé dans plusieurs couches croisées de tissu de verre dont les fibres sont orientées à environ 45° par rapport à l'axe longitudinal de la poutre et imprégnées de résine.

De préférence les semelles, les voiles et les parois latérales sont constituées par le même demi-produit préfabriqué non polymérisé ou partiellement polymérisé, tel que décrit dans la demande de brevet européen déposée par la demanderesse sous le n° EP-A-0 077 727 le 14 octobre 1982.

Dans le cas d'une poutre dont les extrémités présentent en section transversale une forme aplatie l'âme en mousse de matière plastique disposée entre les caissons est supprimée dans les régions des extrémités, qui sont constituées uniquement par lesdits caissons.

Grâce à l'agencement des caissons rendus solidaires de l'âme en mousse et des semelles par polymérisation la liaison entre ces dernières et l'âme est assurée et l'ensemble présente d'excellentes propriétés de résistance en torsion, en flexion et au flambage.

La résistance à la flexion est assurée par les semelles qui sont constituées par le demi-produit tel que défini dans le EP-A-0 077 727 précité de la demanderesse.

D'autres caractéristiques conformes aux revendications et avantages de l'invention apparaîtront au cours de la description qui va suivre de son application à la réalisation d'un bras de liaison pour bateau multicoques, faite en se référant aux dessins annexés donnés uniquement à titre d'exemples et dans lesquels :

La figure 1 est une vue partielle en perspective d'un élément de caisson utilisé pour la réalisation d'un bras de trimaran.

La figure 2 est une vue en section transversale de la partie principale d'une poutre qui constitue une partie intermédiaire du bras de trimaran.

La figure 3 est une vue en section transversale de l'une des extrémités du bras de trimaran réalisé suivant l'invention.

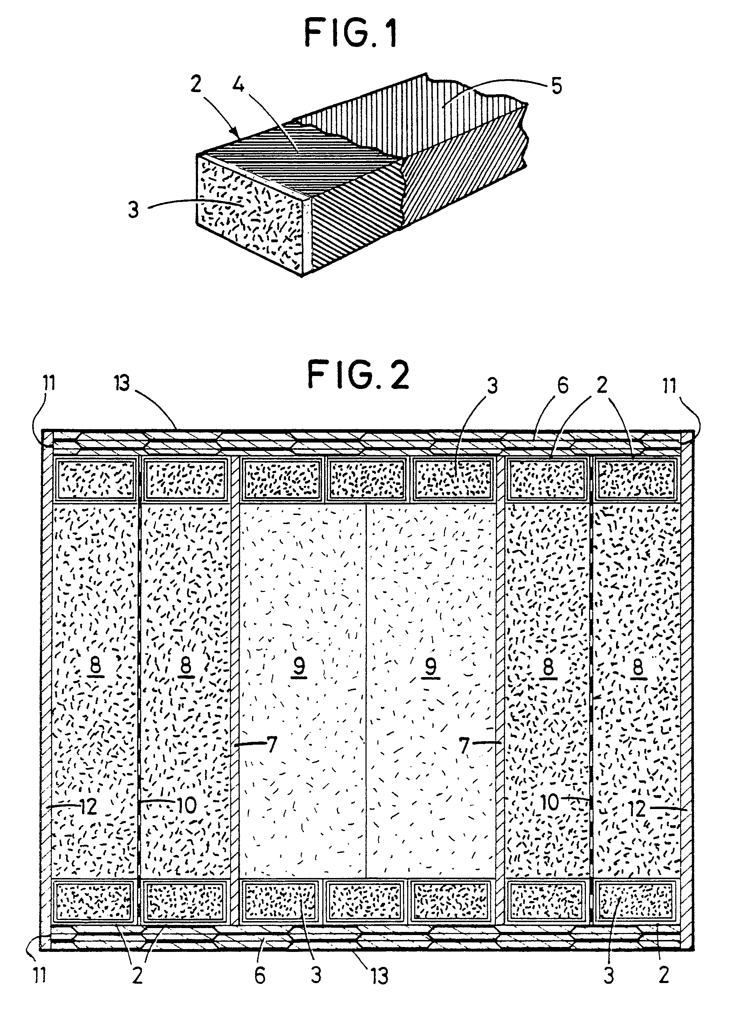

En se référant au dessin on a représenté à la figure 1 une partie d'un caisson préfabriqué utilisé pour la réalisation d'une poutre, suivant l'invention.

Le caisson désigné dans son ensemble par la référence 2 est formé d'une âme 3 en une mousse de résine synthétique dure, par exemple une mousse de polyuréthane d'une densité de 80 kg/m³ environ, qui peut avantageusement présenter en section une forme à peu près rectangulaire et sur laquelle sont enroulées au moins deux couches superposées 4 et 5 de tissu de verre dont les fils sont orientés à 45° par rapport à l'axe longitudinal de l'âme 3, ces tissus étant imprégnés d'une résine polymérisable à chaud.

Les caissons 2 ainsi préalablement formés sont disposés adjacents sur une semelle 6 constituée par un stratifié fibres de verre/résine à couches multiples et, de préférence suivant l'invention par au moins trois couches superposées du demi-produit décrit dans la demande européenne EP-A-0 077 727 précitée de la demanderesse, formé de rangées adjacentes de rubans de stratifils disposées entre deux couches de tissu de verre et l'ensemble étant imprégné de résine.

Deux semelles 6 ainsi constituées sont disposées dans un moule, tel que décrit dans la demande de brevet européen EP-A-0 141 700 déposée le 13 septembre 1984 par la demanderesse, l'une vis-à-vis de l'autre avec les caissons 2 vers l'intérieur.

Des groupes adjacents de caissons, de même nombre suivant l'exemple représenté, sont séparés par des voiles verticaux parallèles 7 relativement épais formés de plusieurs couches de tissu de verre imprégnées de résine, et les espaces entre les voiles 7 sont remplis par une âme 8, 9 en une mousse de résine, par exemple de polyuréthane, de telle sorte que les parties 8 de l'âme situées vers l'extérieur soient en une mousse de résine dure ayant une densité d'environ 80 kg/m³, par exemple, tandis que la partie intermédiaire de l'âme située à l'intérieur est constituée par une mousse analogue mais plus légère ayant par exemple une densité d'environ 50 kg/m³.

Des éléments chauffants 10, constitués comme connu en soi par exemple du GB-A-1 104 842 par un ruban ou autre bande de métal mince disposé entre deux minces feuilles de fibres imprégnées de résine, sont disposés parallèlement aux voiles 7 et répartis entre ceux-ci de façon que la chaleur dégagée lors de leur mise sous tension agisse en profondeur à peu près uniformément dans la masse du matériau composite pour polymériser celui-ci.

Les bords parallèles 11 des semelles 6 et la surface externe de l'âme 8, 9 sont recouverts par des parois latérales 12 relativement épaisses ayant la même structure que les voiles 7 et l'ensemble ainsi constitué peut être recouvert d'une couche 13 de tissu de fibres de verre.

L'ensemble polymérisé sous pression et par chauffage des parois du moule et par chauffage par l'intérieur au moyen des éléments chauffants 10 forme une structure unitaire à caissons multiples, ces caissons étant principalement les caissons 2 préformés puis ceux constitués entre les caissons 2, et les voiles 7 et les parois latérales 12.

Pour former un bras de liaison pour bateau multicoques, par exemple de catamaran, les extrémités de la poutre, qui ont une épaisseur réduite et une forme incurvée toutes deux dans le même sens sont également constituées par des caissons 14 formés par les prolongements des caissons 2 correspondants de chaque semelle, confondus, séparés par des voiles qui, dans ces parties d'extrémité devant présenter une résistance élevée avec une section plus faible, sont avantageusement constitués par plusieurs épaisseurs du même demi-produit que les semelles.

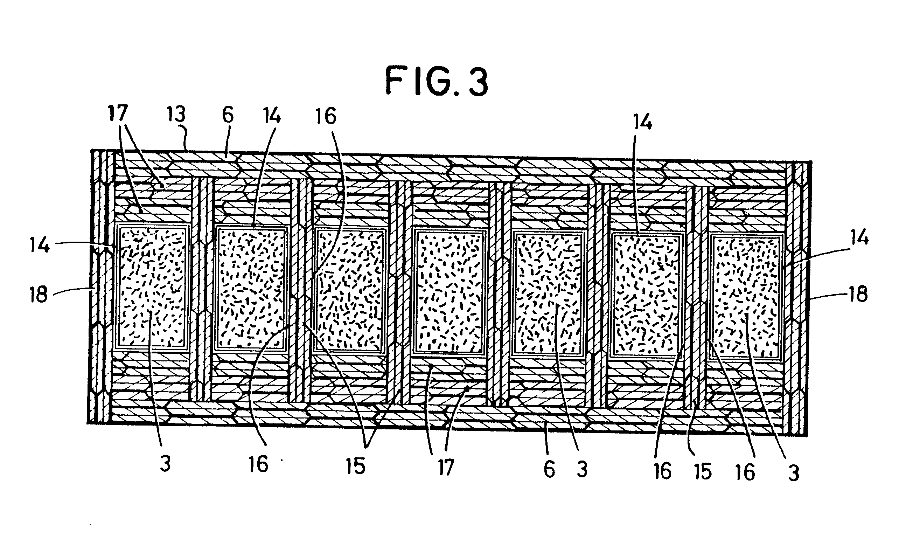

Les caissons 14 (figure 3) sont séparés par des voiles épais comprenant chacun plusieurs couches du demi-produit 15 entre deux couches 16 de tissu de verre imprégné croisées à 45°, ces voiles étant eux mêmes entretoisés par deux fois trois couches 17 du même demi-produit disposées entre les caissons 14 et la semelle 6. Les parois latérales 18 de ces extrémités sont avantageusement identiques aux voiles, 16, 15, 16, tandis que la mousse des caissons 14 est avantageusement dans cette partie d'extrémité une mousse de densité élevée, par exemple de 80 kg/m³.

Des bras de catamaran ainsi constitués ont révélé une résistance inégalée par les réalisations classiques en métal ou autres.

Les caissons 2 assurant dans la partie intermédiaire la liaison entre les semelles 6 et les voiles fournissent une résistance élevée aux efforts en torsion tandis que les voiles 7 et les parois latérales assurent la reprise des efforts en cisaillement et que les semelles 6 assurent la résistance aux efforts en flexion.

Bien que l'on ait représenté et décrit un exemple dans lequel les caissons 2 sont agencés par paires et disposés de façon symétrique sur les deux semelles, on comprend que ces caissons peuvent être placés de façon différente, par exemple décalés, en quinconces ou autrement. De même des caissons peuvent être intercalés et incorporés dans les âmes en mousse de résine si on le désire, la caractéristique essentielle étant l'agencement d'une rangée de caissons préfabriqués sur la face interne de chaque semelle, assurant la solidarisation entre celles-ci et les âmes entre les voiles.

**Revendications**

1. Poutre en matériau composite, du type comprenant deux semelles longitudinales externes (6) réunies par des voiles (7, 15), en fibres imprégnées de résine, et une âme (8, 9) formée de blocs d'une mousse de matière plastique disposés entre lesdites semelles (6) et lesdits voiles (12) et liés à ces derniers, caractérisée en ce qu'elle comprend des caissons préfabriqués (2, 14) ayant un corps (3) en mousse de matière plastique et assurant la solidarisation entre les semelles (6), l'âme en mousse (8, 9), et lesdits voiles (7, 15) de part et d'autre de ceux-ci, lesdites semelles (6) étant constituées par plusieurs couches d'un demi-produit préfabriqué formé de rangées adjacentes de rubans de stratifils disposées entre deux couches de tissu de verre et imprégnées de résine, et deux parois latérales (12, 18).

2. Poutre suivant la revendication 1, caractérisée en ce que le corps (3) des caissons (2) est enveloppé dans au moins deux couches croisées de tissu de fibres de verre, orientées chacune à environ 45° par rapport à l'axe longitudinal de la poutre et imprégnées d'une résine.

3. Poutre suivant la revendication 2, caractérisée en ce que les voiles (7) et les parois latérales (12) sont en fibres imprégnées de résine.

4. Poutre suivant la revendication 3, caractérisée en ce que ladite âme (8, 9) en mousse de résine, par exemple de polyuréthane, disposée dans les espaces entre les voiles (7), présente des parties (8) de l'âme situées vers l'extérieur en une mousse dure ayant une densité de par exemple environ 80 kg/m$^3$, tandis que les parties (9), situées entre lesdites parties externes (8), sont en une mousse analogue mais plus légère ayant par exemple une densité d'environ 50 kg/m$^3$.

5. Poutre suivant la revendication 2, caractérisée en ce que les voiles (15) et les parois latérales (18) sont constitués du même produit préfabriqué que les semelles (6).

6. Poutre suivant la revendication 5, caractérisée en ce que les voiles (15) sont maintenus espacés par des entre-toises (17) disposées entre les caissons (14) et les semelles (6) et constituées du même produit préfabriqué que celles-ci et les voiles.

7. Poutre suivant la revendication 4, caractérisée en ce qu'elle comporte un revêtement externe (13) en tissu de verre.

8. Poutre suivant la revendication 4, caractérisée en ce qu'elle comprend des rubans ou des bandes de métal mince disposés entre deux minces feuilles imprégnées de résine constituant des éléments chauffants (10), comme connu en soi, qui sont incorporés auxdites parties (8, 9) de l'âme, dans des parties internes médianes de celles-ci, parallèlement aux voiles (7) et entre ceux-ci.

9. Poutre en matériau composite caractérisée en ce qu'elle comprend dans sa longueur une partie centrale telle que définie suivant la revendication 4 entre deux parties d'extrémité présentant les caractéristiques de la revendication 5, seul un caisson (14) étant placé entre les semelles (6) et les voiles (15)

10. Bras de liaison pour bateau multicoques caractérisé en ce qu'il est constitué par une poutre telle que définie suivant la revendication 9.

## Claims

1. Beam made of composite material, of the type comprising two external longitudinal flanges (6) joined together by webs (7, 15) of resin-impregnated fibres, and a core (8, 9) formed of blocks of a foamed plastics material disposed between the said flanges (6) and the said webs (7, 15) and joined to the latter, characterised in that it includes pre-fabricated boxes (2, 14) having a body (3) of foamed plastics material and providing the connection between the flanges (6), the foam core (8, 9), and the said webs (7, 15), one with another and amongst themselves, the said flanges (6) being constituted by a plurality of layers of a pre-fabricated intermediate product formed of adjacent rows of flat ribbons of filaments arranged between two layers of glass fibre fabric and impregnated with resin, and two lateral walls (12, 18).

2. Beam according to claim 1, characterised in that the body (3) of the boxes is wrapped in at least two crossed layers of glass fibre each orientated at about 45° with respect to the longitudinal axis of the beam and impregnated with a resin.

3. Beam according to claim 2, characterised in that the webs (7) and the lateral walls (12) are made of resin-impregnated fibres.

4. Beam according to claim 3 characterised in that the said core (8, 9) of foamed resin, for example polyurethane, arranged in the spaces between the webs (7), presents parts (8) of the core situated towards the outside and made of hard foam having a density of, for example, around 80 kg/m$^3$, whereas the parts (9) situated between the said outer parts (8) are made of a similar foam but lighter, having for example a density of around 50 kg/m$^3$.

5. Beam according to claim 2, characterised in that the webs (15) and the lateral walls (18) are constituted of the same pre-fabricated product as the flanges (6).

6. Beam according to claim 5 characterised in that the webs (15) are maintained spaced apart by cross-pieces (17), disposed between the boxes (14) and the flanges (6) and constituted of the same pre-fabricated product as them and the webs.

7. Beam according to claim 4, characterised in that it has an external reinforcement (13) of glass fabric.

8. Beam according to claim 4, characterised in that it includes ribbons or bands of thin metal disposed between two thin leaves impregnated with resin, constituting heating elements (10), known in themselves, which are incorporated in the said parts (8, 9) of the core, in the middle internal portions of the latter, parallel to the webs (7) and between them.

9. Beam of composite material characterised in that it comprises in its length a central part such as defined according to claim 4, between two end parts having the characteristics of claim 5 with only one box (14) between the flanges (6) and the webs (15).

10. Connecting beam for multi-hull boats characterised in that it is constituted by a beam such as that defined in accordance with claim 9.

**Patentansprüche**

1. Balken aus Verbundmaterial, mit zwei über Trennstege (7, 15) miteinander verbundenen, äußeren länglichen Belägen 6, die aus mit Harz getränkten Fasern bestehen, und einem Kern (8, 9), der aus Blöcken eines Kunststoffschaums gebildet ist, die zwischen den Belägen (6) und den Trennstegen (7, 15) angeordnet und mit letzteren verbunden sind, dadurch gekennzeichnet, daß er vorgefertigte Kassettenteile (2, 14) enthält, die einen Körper (3) aus Kunststoffschaum aufweisen und die gegenseitige Verbindung zwischen den Belägen (6), dem Schaumkern (8, 9) und den Trennstegen (7, 15) untereinander sichern, wobei die Beläge (6) aus mehreren Schichten eines vorgefertigten Halbfabrikats zusammengesetzt sind, das aus aneinander grenzenden Reihen von Gewebebändern gebildet ist, die zwischen zwei Schichten von mit Harz imprägniertem Glasgewebe und zwei seitlichen Wänden (12, 18) angeordnet sind.

2. Balken nach Anspruch 1, dadurch gekennzeichnet, daß der Körper (3) der Kassettenteile (2) in wenigstens zwei Schichten von gekreuzten Glasfibermatten eingehüllt ist, die jeweils etwa um 45° gegenüber der Längsachse des Balkens ausgerichtet und mit einem Harz imprägniert sind.

3. Balken nach Anspruch 2, dadurch gekennzeichnet, daß die Trennstege (7) und die seitlichen Wände (12) aus Fasern bestehen, die mit Harz imprägniert sind.

4. Balken nach Anspruch 3, dadurch gekennzeichnet, daß der Kern (8, 9) aus Harzschaum, beispielsweise aus Polyurethan, der in den Zwischenräumen zwischen den Trennstegen (7) angeordnet ist, außenseitig angeordnete Teile (8) des Kerns aus einem harten Schaum bildet, der eine Dichte von z. B. ungefähr 80 kg/m³ hat, während die zwischen den außenseitigen Teilen (8) angeordneten Teile (9) aus einem entsprechenden, aber leichteren Schaum bestehen, der z. B. eine Dichte von etwa 50 kg/m³ hat.

5. Balken nach Anspruch 2, dadurch gekennzeichnet, daß die Trennstege (15) und die seitlichen Wände (18) aus dem gleichen vorgefertigten Material bestehen wie die Beläge (6).

6. Balken nach Anspruch 5, dadurch gekennzeichnet, daß die Trennstege (15) durch Distanzstücke (17) auf Abstand gehalten sind, die zwischen den Kassettenteilen (14) und den Belägen (6) angeordnet sind und aus dem gleichen vorgefertigten Material bestehen wie diese und die Trennstege.

7. Balken nach Anspruch 4, dadurch gekennzeichnet, daß er eine äußere Abdeckung (13) aus Glasgewebe aufweist.

8. Balken nach Anspruch 4, dadurch gekennzeichnet, daß er zwischen zwei dünnen, mit Harz imprägnierten Folien angeordnete Streifen oder Bänder aus dünnem Metall aufweist, die in an sich bekannter Weise Heizelemente (10) bilden, die in die inneren mittleren Bereiche der Teile (8, 9) des Kern eingearbeitet sind und parallel untereinander sowie zu den Trennstegen (7) verlaufen.

9. Balken aus Verbundmaterial, dadurch gekennzeichnet, daß er in seiner Längsrichtung ein Mittelteil gemäß dem Anspruch 4 zwischen zwei äußeren Teilen aufweist, die die Eigenschaften nach dem Anspruch 5 besitzen, wobei nur ein Kassettenteil (14) zwischen den Belägen (6) und den Trennstegen (15) angeordnet ist.

10. Verbindungsarm für mehrschalige Wasserfahrzeuge, dadurch gekennzeichnet, daß er von einem Balken gemäß Anspruch 9 gebildet ist.

# FIG.1

# FIG.2

# FIG. 3

0 142 396